# EUROPEAN PATENT SPECIFICATION

(11) **EP 1 116 343 B1**
(45) Date of publication and mention of the grant of the patent: **05.09.2007**
(21) Application number: 99969552.1
(22) Date of filing: 21.09.1999
(51) Int. Cl.: H04B 7/01, H04B 7/005

(54) **APPARATUS, AND ASSOCIATED METHOD, FOR EFFECTUATING POWER CONTROL OF A COMMUNICATION DEVICE**
GERÄT UND VERFAHREN ZUR LEISTUNGSREGELUNG EINES KOMMUNIKATIONSGERÄTES
APPAREIL ET PROCEDE PERMETTANT D'ACTIONNER LA COMMANDE DE PUISSANCE D'UN DISPOSITIF DE COMMUNICATION

(30) Priority: 21.09.1998 US 101258 P
(43) Date of publication of application: 18.07.2001
(73) Proprietor: Nokia Corporation, 02150 Espoo (FI)
(72) Inventor: TRAN, Jean-Marie, San Diego, CA 92122 (US); KANSAKOSKI, Antti, San Diego, CA 92122 (US)
(74) Representative: Read, Matthew Charles
(86) International application number: PCT/US1999/022011
(87) International publication number: WO 2000/018035

(56) References cited:
- WO-A-94/18756
- US-A- 4 495 648
- US-A- 4 776 035
- US-A- 5 475 861
- US-A- 5 596 570
- US-A- 5 713 074
- US-A- 5 768 684
- US-A- 5 799 005
- US-A- 5 867 769

## Description

The present invention relates generally to a manner by which selectably to control power levels of signals generated during operation of a communication system, such as a cellular communication system. More particularly, the present invention relates to closed-loop, power control apparatus, and an associated method, by which selection is made to not increase the power level at which a signal is transmitted if channel conditions are determined to be beneath a minimum threshold. If channel conditions are so poor that an increase in power levels of signals transmitted upon the communication channel would not appreciably improve communication quality, selection is made not to increase, or even to decrease, transmitted power levels.

### BACKGROUND OF THE INVENTION

Communication through the use of wireless communication systems has achieved wide popularity in recent years. Multi-user, wireless communication systems of improved capabilities have been implemented as a result of advancements in communication technologies. Communication pursuant to such multi-user, wireless communication systems can be affordably made, further increasing the popularity of usage of such systems.

In a wireless communication system, a communication channel formed between a sending station and a receiving station is a radio channel defined upon a portion of the electromagnetic spectrum. Because a radio channel forms a communication link, a wireline connection is not required to be formed between the sending and receiving stations to permit the communication of information between the stations. Communication by way of a wireless communication system is thereby permitted at, and between, locations at which the formation of a wireline connection would not be possible. Also, because a communication channel is formed of a radio channel, a radio communication system can be more economically installed as the infrastructure costs associated with a wireline communication system are significantly reduced.

A cellular communication system is exemplary of a wireless, multi-user radio communication system which has been made possible due to advancements in communication technologies and which has achieved wide levels of usage. A cellular communication system efficiently utilizes the portion of the electromagnetic spectrum allocated thereto. A plurality of fixed-site base stations are installed throughout a geographical area. By transmitting relatively low-power signals, the same frequencies can be reused at different locations throughout the geographical area. Thereby, communications can be effectuated between more than one set of sending and receiving stations concurrently at separated locations throughout the area encompassed by the cellular communication system. Controlling the power levels at which signals generated during operation of a cellular communication system is important to minimize co-channel interference of concurrently-generated communication signals.

Various standards have been promulgated relating to various types of cellular communication systems, and various types of cellular communication systems have been constructed corresponding to such standards. The IS-95 and IS-98 interim standards, promulgated by the EIA/TIA, are exemplary of standards which pertain to a cellular communication system utilizing CDMA (code division multiple access) communication techniques. In a CDMA communication system, a plurality of concurrently-generated communication signals are generated concurrently upon a common channel. When such a communication scheme is utilized, the power levels of such communication signals must be regulated better to achieve optimal capacity.

Various standards are also being proposed for a so-called third-generation (3G), cellular communication system. Proposed standards predicated upon CDMA also set forth a scheme by which to regulate power levels of communication signals generated in such a system, referred to as a IS-95 3G system.

The interim standards and proposed IS-95 3G standard set forth, inter alia, requirements for closed-loop, power control in a cellular communication system constructed pursuant to such standard. And, more generally, because of the need to control power levels of signals generated during operation of a CDMA communication system, closed-loop power control schemes are advantageously implemented in such, as well as other, systems. In an exemplary closed-loop, power control scheme, power control bits are generated and transmitted by network infrastructure on a forward link channel to a mobile station. The power control bit is used, once received at the mobile station, to control the power levels at which reverse link communication signals are generated by the mobile station. Two-way power control can be effectuated in which power control bits are generated at the mobile stations, transmitted to the base station and used to control the power levels of signals generated on a forward link.

The radio communication channels upon which communication signals, including control information, such as the power control bits, must be communicated between the network infrastructure and a mobile station exhibit multi-path characteristics. That is to say, a signal actually received at, e.g., a mobile station, is actually a summation of the same signal transmitted by way of various different transmission paths to the mobile station. The same signal is received at the radio telephone, albeit at various time delays, as a result of such multi-path transmission. Analogously, multi-path characteristics also are exhibited upon an uplink channel upon which signals are transmitted by the mobile station.

Multi-path conditions on the communication channel might cause communication quality degradation, resulting in signal fading. Other communication system conditions might also result in signal fading. And, fading of the communication signal as the signal is transmitted upon the communication channel might prevent its accurate detection at its destination.

To counteract signal fading, closed-loop power control is utilized to cause power levels of signals communicated upon the communication channel to be increased. In the aforementioned CDMA system, e.g., power control bits transmitted to the mobile station are used by the mobile station to select the power levels of signals generated by the mobile station on the reverse link channel. In a two-way, power control scheme, power control bits transmitted to the mobile station are used at the base station to control the power levels of signals transmitted therefrom.

By increasing the power levels of the signals communicated on such channel, signal degradation, due to fading is, ideally, overcome. However, in the event of severe fading conditions, any reasonable power level increase in the power levels of the signals communicated on the communication channel would not result in appreciable communication quality increase. In other words, channel conditions might be so poor that increasing the power levels of the transmitted signals would not result in communication quality improvement.

Increasing the power level of the communication signal might also adversely affect communication qualities of other communication signals transmitted at the same time upon other channels. In the aforementioned, CDMA system, for instance, channels are defined by unique codes, and a plurality of signals are generated at the same time upon a common bandwidth. A signal, when received at a destination, must be decoded. Other signals transmitted upon the common bandwidth are considered to be noise. And, the power levels of such other signals, considered to be noise, must not be so high as to interfere with proper detection and decoding of the desired signal. Signals generated in a CDMA communication system of high power levels are therefore particularly likely to adversely affect communication qualities of other signals generated at the same time.

As noted above, increase in the power level of a communication signal in an attempt to overcome fading is ineffective to improve communication quality levels in deep fading conditions. And, because such an increase in power levels might adversely affect the communication qualities of other communications, care must be exercised when increasing the power levels of the communication signal.

US Patent No. 4,495,648 discloses a transmitter power control circuit in which transmitter power is increased during a deep fade condition.

A manner by which to effectuate power control which takes into account a determination whether a power level increase would benefit communication quality would therefore be advantageous.

It is in light of this background information related to communications by way of a non-ideal communication channel that the significant improvements of the present invention have evolved.

According to the present invention, there is provided a closed loop power control apparatus according to claim 1 and a closed loop power control method according to claim 16.

The present invention, accordingly, advantageously provides power- control apparatus, and an associated method, for effectuating power control in a communication system in which communication signals are transmitted upon non-ideal communication channels.

Power levels of communication signals transmitted upon a communication channel are increased only subsequent to a determination that an increase would result in a communication quality improvement. If a determination is made that a power level increase would not significantly improve communication quality, the power levels of the communication signal are selected to be not increased, or even decreased. Thereby, power level increases are effectuated only if such increase would result in communication quality level improvement.

Determination of a communication quality channel quality indicia is made. Responsive to the determination, selection is made whether to increase power levels of the signal. If the channel quality indicia indicates that an increase in power levels would benefit communication quality, the power levels are increased. If, conversely, the channel quality indicia indicates that an increase in power levels would not benefit communication quality the power levels are not increased.

In one aspect of the present invention, power control is effectuated in a cellular radio telephone operable in a CDMA cellular communication system, such as that proposed to be constructed pursuant to the IS-95 3G system. Proposals for the IS-95 3G standard set forth requirements for fast power control on a forward link extending between a base station and a mobile station. More particularly, proposals have been set forth for the mobile station to request either an increase, or decrease, of power levels at which signals shall be transmitted upon its traffic channel. Requests are to be made every 1.25 ms, i.e., at a 800 Hz refresh rate. The fast power control, forming a closed loop between a base station and mobile station, acts to limit gain variation, e.g., in a range of plus or minus 10dB.

In one aspect of the present invention, control apparatus is implemented at the mobile station to detect when the traffic channel formed between the base station and mobile station exhibits a deep fade condition. When such a condition is detected, power down commands are transmitted to the base station to cause the power levels of signals subsequently transmitted to be reduced.

Because an increase in power levels of the signals would still be insufficient to maintain appropriate communication quality levels, e.g., to permit demodulation of the signal, the power levels are, instead, decreased. Such decrease reduces interference to other signals generated at the same time over the common bandwidth, thereby to permit an increase of system capacity.

In one implementation, detection of a deep fade condition is made subsequent to generation, at the mobile station, of a selected plurality of successive power up commands. For instance, if the power control step of each power up command is 1 dB and the power control range is 20 dB, a deep fade condition is defined to be detected responsive to twenty successive power up commands.

In another implementation, detection of a deep fade condition is made responsive to comparisons between a receive pilot signal strength relative to a moving, or fixed, average of the receive pilot signal strength. For instance, if the comparison is a value of less tan 10 dB, a deep fade condition is defined to be detected.

In yet another implementation, detection of a deep fade condition is made responsive to comparison between a first, or second, derivative of the pilot signal strength with respect to time and a selected threshold. A large negative value of the derivative of the pilot signal strength, in dB, is characteristic of a deep fade condition.

During operation of an embodiment of the present invention, once a deep fade condition detection is made by the mobile station, a selected number of power down commands are generated by the mobile station. Thereafter, the power control loop is effectively disabled, such as by generating a series of mixed power-up and power-down commands. Re-enablement of the power control loop is thereafter made when the deep fade condition is no longer detected.

In one implementation, a deep fade condition is detected to have ended when, e.g., signal strength levels are determined to have increased, as detected at the mobile station. In an implementation in which pilot signal strength is compared to an averaged value of pilot signal strength, when the pilot signal strength increases to be greater than a selected threshold, the deep fade is detected to have ended. And, when a derivative of the pilot signal strength is utilized to detect a deep fade condition, a change in direction, i.e., sign, of the derivative indicates the end of a deep fade condition.

In these and other aspects, therefore, apparatus, and an associated method, is provided for selectively controlling power levels of a communication signal generated by a sending station of a communication system. The sending station sends the communication signal upon a communication channel to a receiving station. The communication channel is susceptible to fading. A determiner is coupled to receive indications of the communication signal, once transmitted upon the communication channel and received at the receiving station. The determiner determines at least when fading exhibited by the communication channel upon which the communication signal is sent cause fading of the communication signal beyond a selected threshold. A power controller is coupled to receive indications of determinations made by the determiner. The power controller selectively provides power control change indications to the sending station. The power control change indications are of levels not to cause an increase in power levels of the communication signal if the determiner determines the fading of the communication signal to be beyond the selected threshold.

A more complete appreciation of the present invention and the scope thereof can be obtained from the accompanying drawings which are briefly summarized below, the following detailed description of the presently-preferred embodiments of the invention, and the appended claims.

### BRIEF DESCRIPTION OF THE DRAWINGS

Figure 1 illustrates a functional block diagram of an exemplary communication system in which an embodiment of the present invention is operable.
Figure 2 illustrates a functional block diagram of a mobile station in which an embodiment of the present invention forms a portion thereof.
Figure 3 illustrates a method flow diagram listing the method steps of the method of an embodiment of the present invention.

### DETAILED DESCRIPTION

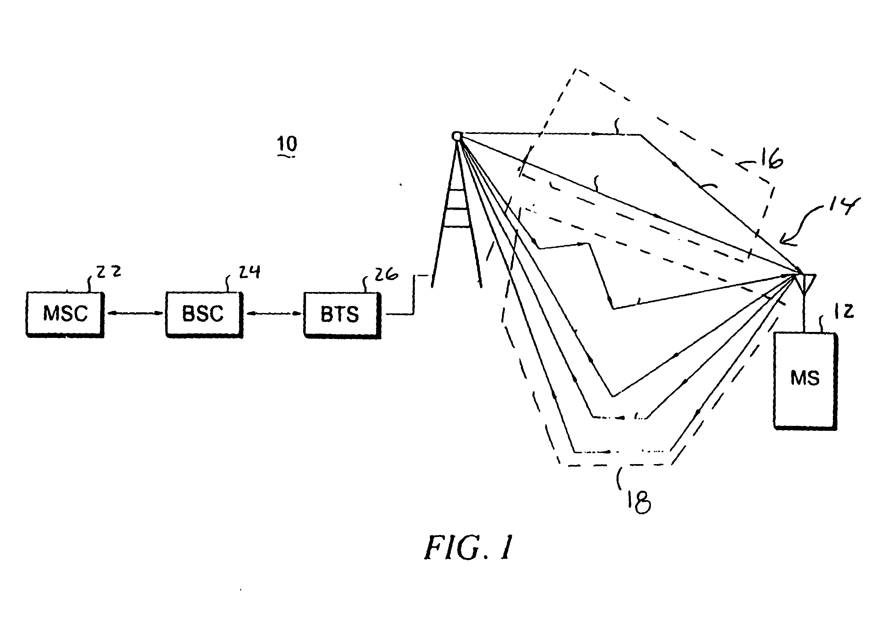

Turning first to Figure 1, an exemplary communication system, shown generally at 10, provides for communication with a mobile station 12 by way of a radio link 14. The exemplary communication system 10 shown in the Figure is representative of a CDMA cellular communication system, e.g., a system to be defined in a proposal for the IS-95 3G (third generation) standard. An embodiment of the present invention is analogously also operable in other types of radio, as well as other, communication systems. And, while the exemplary communication system provides for two-way traffic channels upon the radio link, here a forward link channel 16 and a reverse link channel 18, the power control provided pursuant to an embodiment of the present invention shall be described with respect to communication signals transmitted upon the forward link. Power control can analogously be described with respect to the reverse link.

The communication system 10 includes network infrastructure, here shown to include an MSC (mobile switching center) 22. The MSC 22 is coupled to a BSC (base station controller) 24 which, in turn, is coupled to a BTS (base transceiver station) 26. The BTS 26 defines a cell of the communication system 10 within which communication signals transmitted by the BTS 26 transmitted upon a forward link channel can be received by a mobile station 12, and within which communication signals transmitted by the mobile station 12 can be received by the BTS 26. Two-way communication is thereby effectuated with the mobile station 12 by way of a radio air interface which defines the radio link 14 between the network infrastructure and the mobile station 12.

As noted previously, communication signals generated for transmission upon the radio air interface formed between the network infrastructure and the mobile station must be of appropriate power levels both to ensure that transmitted signals are of signal levels permitting their detection when received and also to ensure that the signal level does not interfere with other concurrently-transmitted communication signals. In a CDMA cellular communication system, as well as in other radio communication systems, power control bits are returned by a receiving station to a sending station to request an increase, or decrease in power levels of subsequently transmitted signals. Thereby, close-loop power control is effectuated by which to control the power levels at which signals are communicated in the communication system.

For instance, power control bits transmitted by the network infrastructure to the mobile station are used by the mobile station to select power levels at which signals are transmitted upon the reverse link. And power control bits transmitted by the mobile station to the network infrastructure are used by the network infrastructure to select power levels at which signals are subsequently transmitted upon the forward link. Thereby, closed loop power control is effectuated on both the reverse and forward links.

The radio link defined by the radio air interface between the network infrastructure and at the mobile station, however, sometimes exhibits multi-path propagation. The forward and reverse links thereby define multi-path channels. Multi-path propagation on such channels might result in signal fading upon the channels. Other conditions might also cause signal fading when fading is significant, a receiving station is unable to accurately recreate the informational content of the transmitted signal. When a channel exhibits significant fading, the channel is referred to as exhibiting a deep fade condition

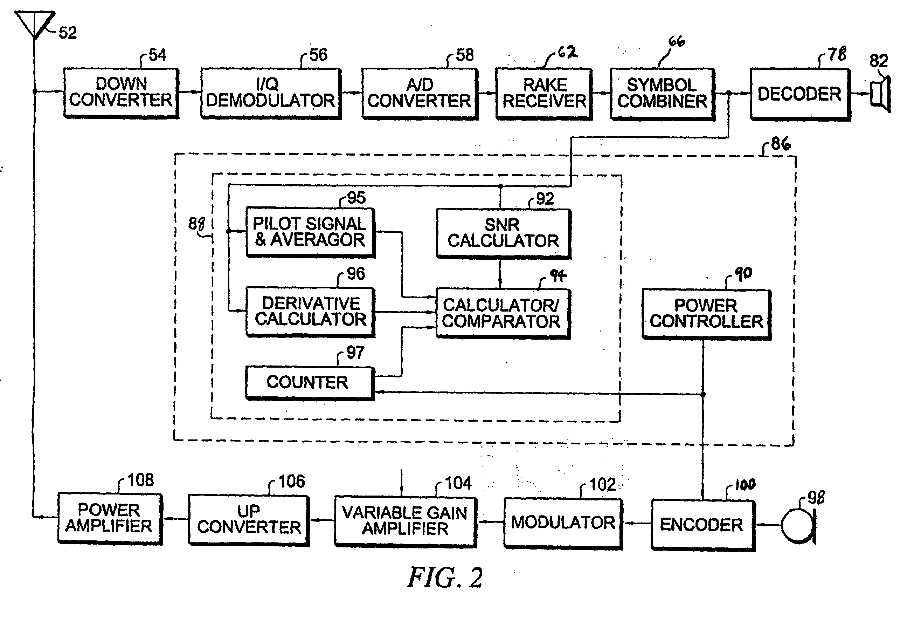

Figure 2 illustrates the mobile station 12, shown previously in Figure 1, and here operable pursuant to an embodiment of the present invention. In conventional manner, the mobile station is selectively tuned to a forward link channel to receive communication signals generated by the network infrastructure. The forward link channel shall herein refer both to a traffic channel and a non-traffic channel. Electromagnetic signals representative of transmitted signals upon a forward link channel are detected by the antenna transducer 52, converted into electrical form, and provided to a multi-stage down converter 54. This down converter 54 is here operable to down-convert the signals provided thereto to base band level and to provide a base band signal to an IQ demodulator 56. The demodulator generates a I- and Q-demodulated signals which are applied to an analog-to-digital converter 58. The converter 58 converts the signals applied thereto into digital form and provides such digitized signals to a rake receiver 62.

While not separately shown, the rake receiver 62 includes a plurality of dynamically-assigned fingers. Symbols detected by the fingers are combined by a symbol combiner 66. A decoder 78 is coupled to the symbol combiner 66 and is operable to decode, e.g., signals representative of traffic information and to provide such symbols, once decoded, to an acoustic, or other, transducer 82.

The mobile station 12 further includes a controller 86, formed of an ASIC (application specific integrated circuit), processing device, or combination thereof. The controller 86 includes functional elements which are operable pursuant to an embodiment of the present invention. Here, the controller is shown to include a determiner 88 and a power controller 90. The determiner is coupled to the receive portion of the mobile station 12 to receive indications of signal detected by the receive portion of the mobile station. And, the power controller 90 is coupled to the determiner to receive indications of determiner to receive indications of determinations thereat.

The determiner is operable to determine whether the forward link channel exhibits a deep fade condition responsive to the indications of signals detected by the receive portion of the mobile station and provided to the determiner. If a determination is made by the determiner that the forward link channel exhibits a deep fade condition, an indication is provided to the power controller 90. The power controller is operable responsive thereto to cause the mobile station to generate a power control request requesting a reduction in power levels of subsequently transmitted communication signal by the network infrastructure to the mobile station.

The determiner is further operable to determine when the forward link channel subsequently no longer exhibits the deep fade condition. When such a determination is subsequently made, indications are also provided to the power controller 90. The power controller 90 is thereafter, responsive thereto, to resume normal power control operations to request increase, or decrease, of subsequently generated signals to be transmitted by the network infrastructure on the forward link channel. Through operation of an embodiment of the present invention, therefore, if an increase in power levels of a signal would not appreciably improve communication quality levels, the power level at which the communication signal is transmitted is selected to be reduced in power. Thereby, communication quality of other communications are improved.

In one implementation, and as illustrated, the determiner includes a signal-to-noise ratio (SNR) calculator 92 coupled to receive indications of signal strength levels of communication signals transmitted by the network infrastructure to the mobile station and also to receive indications of corresponding noise levels. The SNR calculator 92 calculates a signal-to-noise ratio, and provides an indication of the ratio calculated thereat to a calculator/comparitor 94. The calculator/comparitor compares the calculated ratio with a selected threshold value. If the signal-to-noise ratio is not greater than the selected threshold, the communication channel is determined to exhibit a deep fade condition. An indication of such determination is provided to the power controller.

As noted above, the power controller 90 is thereafter operable to request that the power levels of the communication signal be reduced. Even during deep fade conditions, measurements are continued to be made of the signal-to-noise ratios. When the ratio returns to be of a value at least as great as the selected threshold, a determination is made that the channel no longer exhibits a deep fade condition. And, the power controller is informed of the new determination and normal operations resume.

In another embodiment, indications of a signal strength of a pilot signal generated by network infrastructure and broadcast to mobile station, such as the mobile station 12, are provided to a pilot strength calculator and averager 95. Indications of the signal strength of the pilot signal together with an average value over time are provided to the calculator/comparitor 94. If ratios of the pilot signal strength relative to its average value over time is less than a selected threshold, as compared by the comparitor 94, a determination is made that the communication channel exhibits a deep fade condition. And, indication of the determination is provided to the power controller 90. The power controller, responsive thereto, requests that subsequent communication signals transmitted to the mobile station be of reduced power levels, again until a determination is subsequently made that the communication channel no longer exhibits a deep fade condition.

In another implementation, and also as illustrated in the Figure, a derivative calculator 96 is utilized to calculate a first, or second, derivative of the pilot signal strength. Indications of the calculator derivative are provided to the calculator/comparitor 94. The calculator/comparitor 94 compares the calculator derivative with a selected value, such as a selected negative value. If the calculated value of the derivative is beyond, for instance, more negative than the selected value, a determination is made that the communication channel exhibits a deep fade condition. An indication is provided to the power controller 90 to cause a request to be made that the power level of signals subsequently transmitted to the mobile station be reduced in power at least for the duration of the deep fade condition.

In another implementation, also illustrated in the Figure, a counter 97 maintains a count of power-up commands generated by the power controller to request power level increases. If a selected number of power-up increase requests are successively generated, a deep fade condition on the communication channel is determined to be exhibited. Count values provided by the counter 97 are provided to the calculator/comparitor . If a selected number, for example, twenty successive power-up commands are generated by the power controller 90, a determination is made that the communication channel exhibits a deep fade condition. Results of the determination are provided to the power controller 90, and the power controller generates power-down requests to reduce the power levels of communication signals subsequently transmitted by the network infrastructure.

In an exemplary implementation, combinations of separate manners by which to determine the presence of a deep fade condition on the communication channel are utilized, together to determine the existence of the deep fade condition.

The transmit portion of the mobile station 12 is here shown to include a transducer, here a microphone 98, an encoder 100 coupled to the microphone 98 and also to the controller to encode signals provided thereto, and a modulator 102, coupled to the encoder 100 and operable to modulate the encoded signals provided thereto. The transmit portion of the mobile station is further shown to include a VGA (variable gain amplifier) 104, operable to amplify the modulated signal formed by the modulator 102, a multi-stage up converter 106 for up converting the amplified signal, and a power amplifier 108 for amplifying the up-converted signal.

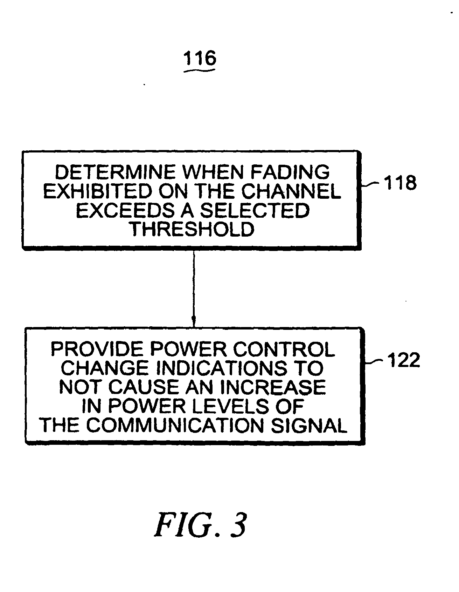

Figure 3 illustrates a method, shown generally at 116, of an embodiment of the present invention. The method selectively controls power levels of a communication signal sent by a sending station upon a communication channel to a receiving station. First, and as indicated by the block 118, a determination is made, responsive to indications of the communication signal transmitted upon the communication channel and received at the receiving station at least when fading exhibited by the communication channel causes fading of the communication signal beyond a selected threshold. Then, and as indicated by the block 122, power control change indications are selectively provided to the sending station. The power control change indications are of levels not to cause an increase in power levels of the communication signal only if the fading of the communication signal is determined to be beyond the selected threshold.

Through operation of an embodiment of the present invention, when a determination is made that channel conditions are so poor that an increase in power levels of signals transmitted upon a communication channel would not appreciably improve communication quality, a selection is made to decrease the transmitted power levels of the signals, at least for a selected period.

The circuitry shown in Figure 2 which forms the mobile station is analogous to circuitry which forms a portion of a base station of an embodiment of the present invention. When the circuitry shown in Figure 2 forms a portion of a base station, power control bits transmitted upon a channel are received at the base station and are utilized at the base station to effectuate power control on the downlink, in like fashion as that described with respect to effectuation of power control at the mobile station.

A method of an embodiment of the present invention is operable to use a power control bit, transmitted upon a multi-path downlink channel and received at a two-way communication device.

First, indications of the power control bit transmitted upon the multi-path downlink channel are stored at a buffer. And, a delay spread of the power control bit is determined. Then, a value of the power control bit is extracted once the delay spread is determined.

Through operation of an embodiment of the present invention, therefore, the value of the power control bit is retrieved and used for power control purposes as soon as the delay spread is determined. Because an arbitrary time period is not required to expire prior to such determination, the power control bit is able to be used more quickly to effectuate power control. And, through operation of an embodiment of the present invention, because adjustment to the timing alignment of the mobile station is limited to the starts of power control groups, such timing adjustment is made without interfering with delay spread determinations.

The previous descriptions are of preferred examples for implementing the invention, and the scope of the invention should not necessarily be limited by this description. The scope of the present invention is defined by the following claims.

## Claims

1. A closed loop power control apparatus for selectively controlling power levels of a communication signal sent over a communication channel (14) from a sending station (26) to a receiving station (12), said power control apparatus comprising:
a determiner (88) coupled to receive indications of the communication signal, once transmitted over the communication channel and received at the receiving station, the determiner operable to determine the existence of a deep fade condition, the deep fade condition existing when fading exhibited by the communication channel causes fading of the communication signal beyond a selected threshold; and
a power controller (90) coupled to receive indications of determinations made by said determiner, said power controller operable to provide power control change indications to the sending station, the power control change indications being arranged not to cause an increase in power levels of the communication signal if the determiner determines that a deep fade condition exists.

2. The power control apparatus of claim 1 wherein said determiner is coupled to receive indications of both a signal strength of the communication signal and noise levels of noise, said determiner for determining a signal-to-noise ratio and, responsive to a value of the signal-to-noise ratio less than a selected value, for determining the fading exhibited by the communication channel to be beyond the selected threshold.

3. The power control apparatus of claim 1 wherein said determiner is further for determining, subsequent to determining when the fading exhibited by the communication channel is beyond the selected threshold, when the fading exhibited by the communication channel returns to be within the selected threshold, said determiner for determining the fading to be within the selected threshold responsive to the value of signal-to-noise ration returning to be greater than the selected value.

4. The power control apparatus of claim 3 wherein said power controller further provides power control change indications to the sending station to permit an increase in power levels of the communication signal when the fading exhibited by the communication channel returns to be within the selected threshold.

5. The power control apparatus of claim 1 wherein said determiner is coupled to receive indications of power control change indications previously provided by said power controller to the sending station, said determiner for determining the fading exhibited by the communication channel to be beyond the selected threshold when a selected number of successive power control change indications previously provided by said power controller request increase in the power levels of the communication signal.

6. The power control apparatus of claim 5 wherein said determiner is further for determining, subsequent to determining when the fading exhibited by the communication channel is beyond the selected threshold, when the fading exhibited by the communication channel returns to be within the selected threshold.

7. The power control apparatus of claim 6 wherein said power controller further provides power control change indications to the sending station to permit an increase in power levels of the communication signal when the fading exhibited by the communication channel returns to be within the selected threshold.

8. The power control apparatus of claim 1 wherein a pilot signal is further broadcast by the sending station to the receiving station and wherein said determiner is coupled to receive indications of both a signal strength of the pilot signal and an average value of the signal strength of the pilot signal, said determiner for comparing the indications of the signal strength of the pilot signal with the indications of the average value to form a comparison therebetween, said determiner for determining the fading exhibited by the communication channel to be beyond the selected threshold when the comparison is less than a selected level.

9. The power control apparatus of claim 1 wherein a pilot signal is further broadcast by the sending station to the receiving station and wherein said determiner is coupled to receive indications of a derivative of signal strength of the pilot signal, said determiner for determining the fading exhibited by the communication channel when the derivative is at least a selected negative value.

10. The power control apparatus of claim 1 wherein said power controller further provides at least one power control change indication to the sending station to cause a decrease in the power levels of the communication signal if the determiner determines the fading of the communication signal to be beyond the selected threshold.

11. The power control apparatus of claim 10 wherein said power controller provides a selected plurality of power control change indications to the sending station to cause the decrease in the power levels of the communication signal by a selected magnitude of power level decrease.

12. The power control apparatus of claim 11 wherein, subsequent to providing the selected plurality of power control change indications to the sending station, said power control provides subsequent power control change indications to the sending station to maintain the decrease in the power levels of the communication signal to be of the selected magnitude of power level decrease.

13. The power control apparatus of claim 1 wherein the communication system comprises of CDMA (code division multiple access) cellular communication system, wherein the sending station comprises a base station of network infrastructure of the cellular communication system, wherein the receiving station comprises a mobile station and wherein at least a portion of said determiner is located at the mobile station.

14. The power control apparatus of claim 13 wherein at least a portion of said power controller is located at the mobile station.

15. The power control apparatus of claim 13 wherein the communication channel comprises a forward-link traffic channel and wherein said determiner determines whether the forward link traffic channel exhibits a deep fade condition.

16. A closed-loop power control method for selectively controlling power levels of a communication signal sent by a sending station (26) upon a communication channel (14) to a receiving station (12), the communication channel susceptible to fading, said method comprising:
determining, responsive to indications of the communication signal once transmitted over the communication channel and received at the receiving station, when fading exhibited by the communication channel over which the communication signal is sent causes fading of the communication signal beyond a selected threshold that indicates that a deep fade condition exists; and
selectively providing power control change indications to the sending station responsive to determinations made during said operation of determining, the power control indications being arranged not to cause an increase in power levels of the communication signal if the fading of the communication signal is determined to indicate that a deep fade condition exists.

17. The method of claim 16 wherein the power control change indications are arranged to cause a decrease in the power levels of the communication signal.

18. The method of claim 16 comprising the additional operations of :
subsequently determining when fading exhibited by the communication channel no longer causes fading of the communication signal beyond the selected threshold; and re-enabling normal power control change indications to the sending station.

19. The method of claim 16 wherein the sending station comprises a base station of a cellular communication system and the receiving station comprises a mobile station and wherein said operations of determining and selectively providing arc performed at the mobile station.

## Patentansprüche

1. Leistungsregelungseinrichtung mit geschlossenem Regelkreis zur selektiven Regelung von Leistungspegeln eines Kommunikationssignals, das über einen Kommunikationskanal (14) von einer Sendestation (26) an eine Empfangsstation (12) gesendet wird, wobei die Leistungsregelungseinrichtung umfasst:
eine Bestimmungseinrichtung (88), die so verbunden ist, dass sie Angaben des Kommunikationssignals empfängt, sobald diese über den Kommunikationskanal gesendet wurden und an der Empfangsstation empfangen wurden, wobei die Bestimmungseinrichtung betriebsfähig ist, das Vorliegen eines Zustands mit starkem Schwund zu bestimmen, wobei der Zustand mit starkem Schwund vorliegt, wenn ein Schwund, den der Kommunikationskanal aufweist, einen Schwund des Kommunikationssignals über einen gewählten Schwellwert hinaus verursacht; und
einen Leistungsregler (90), der so verbunden ist, dass er Angaben über Bestimmungen empfängt, die von der Bestimmungseinrichtung gemacht wurden, wobei der Leistungsregler betriebsfähig ist, Leistungsregelungs-Änderungsangaben an die Sendestation zu liefern, wobei die Leistungsregelungs-Änderungsangaben so eingerichtet sind, dass sie keine Erhöhung der Leistungspegel des Kommunikationssignals bewirken, wenn die Bestimmungseinrichtung bestimmt, dass ein Zustand mit starkem Schwund vorliegt.

2. Leistungsregelungseinrichtung nach Anspruch 1, wobei die Bestimmungseinrichtung so verbunden ist, dass sie Angaben über sowohl eine Signalstärke des Kommunikationssignals als auch über Rauschpegel von Rauschen empfängt, wobei die Bestimmungseinrichtung zum Bestimmen eines Signal-Rausch-Verhältnisses vorgesehen ist und, ansprechend auf einen Wert des Signal-Rausch-Verhältnisses, der geringer als ein ausgewählter Wert ist, zum Bestimmen, dass der Schwund, der in dem Kommunikationskanal auftritt, über einem gewählten Schwellwert liegt.

3. Leistungsregelungseinrichtung nach Anspruch 1, wobei die Bestimmungseinrichtung weiter dazu vorgesehen ist, im Anschluss an die Bestimmung, wann der im Kommunikationskanal auftretende Schwund über dem gewählten Schwellwert liegt, zu bestimmen, wann der im Kommunikationskanal auftretende Schwund wieder innerhalb des gewählten Schwellwerts liegt, wobei die Bestimmungseinrichtung dazu eingerichtet ist, zu bestimmen, dass der Schwund innerhalb des gewählten Schwellwerts liegt, in Reaktion darauf, dass der Wert des Signal-Rausch-Verhältnisses wieder größer als der gewählte Wert ist.

4. Leistungsregelungseinrichtung nach Anspruch 3, wobei der Leistungsregler weiter Leistungsregelungs-Änderungsangaben an die Sendestation bereitstellt, um eine Erhöhung der Leistungspegel des Kommunikationssignals zu gestatten, wenn der in dem Kommunikationskanal auftretende Schwund wieder innerhalb des gewählten Schwellwerts liegt.

5. Leistungsregelungseinrichtung nach Anspruch 1, wobei die Bestimmungseinrichtung so verbunden ist, dass sie Angaben über Leistungsregelungs-Änderungsangaben empfängt, die zuvor von dem Leistungsregler an die Sendestation bereitgestellt wurden, wobei die Bestimmungseinrichtung dazu vorgesehen ist, zu bestimmen, dass der in dem Kommunikationskanal auftretende Schwund über dem gewählten Schwellwert liegt, wenn eine gewählte Anzahl aufeinanderfolgender Leistungsregelungs-Änderungsangaben, die zuvor von dem Leistungsregler bereitgestellt wurden, eine Erhöhung der Leistungspegel des Kommunikationssignals fordern.

6. Leistungsregelungseinrichtung nach Anspruch 5, wobei die Bestimmungseinrichtung weiter dazu vorgesehen ist, im Anschluss an die Bestimmung, wann der in dem Kommunikationskanal auftretende Schwund über dem gewählten Schwellwert liegt, zu bestimmen, wann der in dem Kommunikationskanal auftretende Schwund, wieder innerhalb des gewählten Schwellwerts liegt.

7. Leistungsregelungseinrichtung nach Anspruch 6, wobei der Leistungsregler weiter Leistungsregelungs-Änderungsangaben an die Sendestation bereitstellt, um eine Erhöhung von Leistungspegeln des Kommunikationssignals zu gestatten, wenn der in dem Kommunikationskanal auftretende Schwund wieder innerhalb des gewählten Schwellwerts liegt.

8. Leistungsregelungseinrichtung nach Anspruch 1, wobei ein Pilotsignal weiter von der Sendestation zu der Empfangsstation ausgestrahlt wird und wobei die Bestimmungseinrichtung so verbunden ist, dass sie Angaben über sowohl eine Signalstärke des Pilotsignals als auch einen Durchschnittswert der Signalstärke des Pilotsignals empfängt, wobei die Bestimmungseinrichtung dazu vorgesehen ist, die Angaben über die Signalstärke des Pilotsignals mit den Angaben über den Durchschnittswert zu vergleichen, um einen Vergleich dazwischen zu bilden, wobei die Bestimmungseinrichtung dazu eingerichtet ist, zu bestimmen, dass der in dem Kommunikationskanal auftretende Schwund über dem gewählten Schwellwert liegt, wenn der Vergleich unterhalb eines gewählten Niveaus liegt.

9. Leistungsregelungseinrichtung nach Anspruch 1, wobei ein Pilotsignal weiter von der Sendestation zu der Empfangsstation ausgestrahlt wird und wobei die Bestimmungseinrichtung so verbunden ist, dass sie Angaben über eine Ableitung der Signalstärke des Pilotsignals empfängt, wobei die Bestimmungseinrichtung dazu vorgesehen ist, den in dem Kommunikationskanal auftretenden Schwund zu bestimmen, wenn die Ableitung mindestens ein gewählter negativer Wert ist.

10. Leistungsregelungseinrichtung nach Anspruch 1, wobei der Leistungsregler weiter mindestens eine Leistungsregelungs-Änderungsangabe an die Sendestation bereitstellt, um eine Verringerung der Leistungspegel des Kommunikationssignals zu bewirken, wenn die Bestimmungseinrichtung bestimmt, dass der Schwund des Kommunikationssignals über dem gewählten Schwellwert liegt.

11. Leistungsregelungseinrichtung nach Anspruch 10, wobei der Leistungsregler mehrere ausgewählte Leistungsregelungs-Änderungsangaben an die Sendestation bereitstellt, um die Verringerung der Leistungspegel des Kommunikationssignals um eine gewählte Größe einer Leistungspegelverringerung zu bewirken.

12. Leistungsregelungseinrichtung nach Anspruch 11, wobei nach dem Bereitstellen der mehreren ausgewählten Leistungsregelungs-Änderungsangaben an die Sendestation der Leistungsregler nachfolgende Leistungsregelungs-Änderungsangaben an die Sendestation bereitstellt, um die Verringerung der Leistungspegel des Kommunikationssignals so aufrechtzuerhalten, dass sie der gewählten Größe der Leistungspegelverringerung entsprechen.

13. Leistungsregelungseinrichtung nach Anspruch 1, wobei das Kommunikationssystem ein CDMA (code division multiple access)-Mobilkommunikationssystem umfasst, wobei die Sendestation eine Basisstation einer Netzinfrastruktur des Mobilkommunikationssystems umfasst, wobei die Empfangsstation eine Mobilstation umfasst und wobei sich zumindest ein Teil der Bestimmungseinrichtung in der Mobilstation befindet.

14. Leistungsregelungseinrichtung nach Anspruch 13, wobei sich zumindest ein Teil des Leistungsreglers in der Mobilstation befindet.

15. Leistungsregelungseinrichtung nach Anspruch 13, wobei der Kommunikationskanal einen Forward Link Traffic Channel umfasst, und wobei die Bestimmungseinrichtung bestimmt, ob der Forward Link Traffic Channel einen Zustand starken Schwunds aufweist.

16. Leistungsregelungsverfahren mit geschlossenem Regelkreis zur selektiven Regelung von Leistungspegeln eines Kommunikationssignals, das von einer Sendestation (26) auf einem Kommunikationskanal (14) an eine Empfangsstation (12) gesendet wird, wobei der Kommunikationskanal anfällig für Schwund ist, wobei das Verfahren umfasst:
Bestimmen, in Reaktion auf Angaben über das Kommunikationssignal, sobald diese über den Kommunikationskanal gesendet wurden und an der Empfangsstation empfangen wurden, wann ein Schwund, der in dem Kommunikationskanal auftritt, über welchen das Kommunikationssignal gesendet wird, einen Schwund des Kommunikationssignals über einen gewählten Schwellwert hinaus verursacht, was anzeigt, dass ein Zustand starken Schwunds vorliegt; und
selektives Bereitstellen von Leistungsregelungs-Änderungsangaben an die Sendestation, in Reaktion auf Bestimmungen, die während des Bestimmungsvorgangs gemacht wurden, wobei die Leistungsregelungsangaben dazu eingerichtet sind, keine Erhöhung der Leistungspegel des Kommunikationssignals zu bewirken, wenn bestimmt wird, dass der Schwund des Kommunikationssignals anzeigt, dass ein Zustand starken Schwunds vorliegt.

17. Verfahren nach Anspruch 16, wobei die Leistungsregelungs-Änderungsangaben dazu eingerichtet sind, eine Verringerung der Leistungspegel des Kommunikationssignals zu bewirken.

18. Verfahren nach Anspruch 16, umfassend die zusätzlichen Vorgänge:
nachfolgendes Bestimmen, wann ein in dem Kommunikationskanal auftretender Schwund keinen Schwund des Kommunikationssignals mehr über den gewählten Schwellwert hinaus verursacht; und wieder Aktivieren normaler Leistungsregelungs-Änderungsangaben an die Sendestation.

19. Verfahren nach Anspruch 16, wobei die Sendestation eine Basisstation eines Mobilkommunikationssystems umfasst und die Empfangsstation eine Mobilstation umfasst, und wobei die Vorgänge des Bestimmens und wahlweisen Bereitstellens an der Mobilstation ausgeführt werden.

## Revendications

1. Appareil de régulation de puissance en circuit fermé servant à commander de manière sélective les niveaux de puissance d'un signal de communication envoyé sur une voie de transmission (14) d'une station d'émission (26) à une station de réception (12), ledit appareil de régulation de puissance comprenant :
un déterminateur (88) raccordé pour recevoir des indications du signal de communication, une fois transmis sur la voie de transmission et reçu à la station de réception, le déterminateur servant à déterminer l'existence d'une condition d'évanouissement profond, la condition d'évanouissement profond existant lorsqu'un évanouissement affiché par la voie de transmission entraîne un évanouissement du signal de communication au-delà d'un seuil sélectionné ; et
un contrôleur de puissance (90) raccordé pour recevoir des indications relatives aux déterminations effectuées par ledit déterminateur, ledit contrôleur de puissance servant à fournir des indications de changement de régulation de puissance à la station d'émission, les indications de changement de régulation de puissance étant arrangées pour ne pas entraîner une augmentation des niveaux de puissance du signal de communication si le déterminateur détermine qu'une condition d'évanouissement profond existe.

2. Appareil de régulation de puissance selon la revendication 1, dans lequel ledit déterminateur est raccordé pour recevoir des indications à la fois d'une intensité de signal du signal de communication et des niveaux de bruit du bruit, ledit déterminateur servant à déterminer un rapport signal sur bruit et, en réponse à une valeur du rapport signal sur bruit inférieure à une valeur sélectionnée, servant à déterminer l'évanouissement affiché par la voie de transmission afin qu'il soit au-delà du seuil sélectionné.

3. Appareil de régulation de puissance selon la revendication 1, dans lequel ledit déterminateur sert en outre à déterminer, ultérieurement à la détermination lorsque l'évanouissement affiché par la voie de transmission est au-delà du seuil sélectionné, lorsque l'évanouissement affiché par la voie de transmission revient dans le seuil sélectionné, ledit déterminateur servant à déterminer l'évanouissement afin qu'il soit dans le seuil sélectionné en réponse à la valeur du rapport signal sur bruit redevenant supérieure à la valeur sélectionnée.

4. Appareil de régulation de puissance selon la revendication 3, dans lequel ledit contrôleur de puissance fournit en outre des indications de changement de régulation de puissance à la station d'émission pour permettre une augmentation des niveaux de puissance du signal de communication lorsque l'évanouissement affiché par la voie de transmission revient dans le seuil sélectionné.

5. Appareil de régulation de puissance selon la revendication 1, dans lequel ledit déterminateur est raccordé pour recevoir des indications des indications de changement de régulation de puissance fournies précédemment par ledit contrôleur de puissance à la station d'émission, ledit déterminateur servant à déterminer l'évanouissement affiché par la voie de transmission afin qu'il soit au-delà du seuil sélectionné lorsqu'un nombre sélectionné d'indications de changement de régulation de puissance successives fournies précédemment par ledit contrôleur de puissance nécessite une augmentation des niveaux de puissance du signal de communication.

6. Appareil de régulation de puissance selon la revendication 5, dans lequel ledit déterminateur sert en outre à déterminer, ultérieurement à la détermination lorsque l'évanouissement affiché par la voie de transmission est au-delà du seuil sélectionné, lorsque l'évanouissement affiché par la voie de transmission revient dans le seuil sélectionné.

7. Appareil de régulation de puissance selon la revendication 6, dans lequel ledit contrôleur de puissance fournit en outre des indications de changement de régulation de puissance à la station d'émission pour permettre une augmentation des niveaux de puissance du signal de communication lorsque l'évanouissement affiché par la voie de transmission revient dans le seuil sélectionné.

8. Appareil de régulation de puissance selon la revendication 1, dans lequel une onde pilote est en outre diffusée par la station d'émission à la station de réception et dans lequel ledit déterminateur est raccordé pour recevoir des indications à la fois d'une intensité de signal de l'onde pilote et d'une valeur moyenne de l'intensité de signal de l'onde pilote, ledit déterminateur servant à comparer les indications de l'intensité de signal de l'onde pilote aux indications de la valeur moyenne pour former une comparaison entre les deux, ledit déterminateur servant à déterminer l'évanouissement affiché par la voie de communication afin qu'il soit au-delà du seuil sélectionné lorsque la comparaison est inférieure à un niveau sélectionné.

9. Appareil de régulation de puissance selon la revendication 1, dans lequel une onde pilote est en outre diffusée par la station d'émission à la station de réception et dans lequel ledit déterminateur est raccordé pour recevoir des indications d'un dérivé de l'intensité de signal de l'onde pilote, ledit déterminateur servant à déterminer l'évanouissement affiché par la voie de transmission lorsque le dérivé est au moins une valeur négative sélectionnée.

10. Appareil de régulation de puissance selon la revendication 1, dans lequel ledit contrôleur de puissance fournit en outre au moins une indication de changement de régulation de puissance à la station d'émission pour entraîner une diminution des niveaux de puissance du signal de communication si le déterminateur détermine que l'évanouissement du signal de communication est au-delà du seuil sélectionné.

11. Appareil de régulation de puissance selon la revendication 10, dans lequel ledit contrôleur de puissance fournit une pluralité sélectionnée d'indications de changement de régulation de puissance à la station d'émission pour entraîner la diminution des niveaux de puissance du signal de communication par une ampleur sélectionnée de la diminution de niveau de puissance.

12. Appareil de régulation de puissance selon la revendication 11, dans lequel, ultérieurement à la fourniture de la pluralité sélectionnée d'indications du changement de régulation de puissance à la station d'émission, ledit contrôle de puissance fournit des indications de changement de régulation de puissance ultérieures à la station d'émission pour maintenir la diminution des niveaux de puissance du signal de communication afin qu'ils soient de l'ampleur sélectionnée de la diminution de niveau de puissance.

13. Appareil de régulation de puissance selon la revendication 1, dans lequel le système de communication comprend un système de communication cellulaire CDMA (code division multiple access : accès multiple par répartition en code), dans lequel la station d'émission comprend une station de base d'une infrastructure réseau du système de communication cellulaire, dans lequel la station de réception comprend une station mobile et dans lequel au moins une partie dudit déterminateur est située sur la station mobile.

14. Appareil de régulation de puissance selon la revendication 13, dans lequel au moins une partie dudit contrôleur de puissance est située sur la station mobile.

15. Appareil de régulation de puissance selon la revendication 13, dans lequel la voie de transmission comprend un canal de trafic de liaison aller et dans lequel ledit déterminateur détermine si le canal de trafic de liaison aller affiche une condition d'évanouissement profond.

16. Procédé de régulation de puissance en circuit fermé servant à contrôler de manière sélective les niveaux de puissance d'un signal de communication envoyé par une station d'émission (26) sur une voie de transmission (14) à une station de réception (12), la voie de transmission prédisposée à l'évanouissement, ledit procédé comprenant :
la détermination, en réponse aux indications du signal de communication une fois transmis sur la voie de transmission et reçu à la station de réception, lorsque l'évanouissement affiché par la voie de transmission sur laquelle le signal de communication est envoyé entraîne un évanouissement du signal de communication au-delà d'un seuil sélectionné qui indique qu'une condition d'évanouissement profond existe ; et
la fourniture de manière sélective des indications de changement de régulation de puissance à la station d'émission en réponse aux déterminations effectuées pendant ladite opération de détermination, les indications de régulation de puissance étant arrangées pour ne pas entraîner une augmentation des niveaux d'énergie du signal de communication si l'évanouissement du signal de communication est déterminé pour indiquer qu'une condition d'évanouissement profond existe.

17. Procédé selon la revendication 16 dans lequel les indications de changement de régulation de puissance sont arrangées pour entraîner une diminution des niveaux de puissance du signal de communication.

18. Procédé selon la revendication 16, comprenant les opérations supplémentaires de :
détermination ultérieure lorsque l'évanouissement affiché par la voie de transmission n'entraîne plus l'évanouissement du signal de communication au-delà du seuil sélectionné ; et la réactivation des indications de changement de régulation de puissance normales à la station d'émission.

19. Procédé selon la revendication 16, dans lequel la station d'émission comprend une station de base d'un système de communication cellulaire et la station de réception comprend une station mobile et dans lequel lesdites opérations de détermination et de fourniture de manière sélective sont réalisées à la station mobile.
